# EUROPEAN PATENT APPLICATION

(11) **EP 2 157 062 A1**
(43) Date of publication of application: **24.02.2010**
(21) Application number: 08162814.1
(22) Date of filing: 22.08.2008
(51) Int. Cl.: C03C 8/12, C23D 5/02

(54) **Low V2O5-content and V2O5-free porcelain enamels**

(71) Applicant: Pemco Brugge BVBA, 8000 Brugge (BE)
(72) Inventor: Efimenko, Svetlana, 8820 Torhout (BE); Crevits, Nancy, 8380 Dudzele (BE); Schlegel, Christian, 59170 Croix (FR)
(74) Representative: Jönsson, Hans-Peter

(57) **Abstract**

The present invention relates to a low-V₂O₅- content and even V₂O₅-free porcelain enamel with improved dish-washer resistance and good adherence on various substrates. The invention moreover relates to a low-V₂O₅- content and even V₂O₅-free porcelain enamel coating for application on a substrate made of aluminium, cast aluminum, aluminium alloy, aluminium-magnesium alloy, cast aluminium alloy, copper, austenitic stainless steel and mild steel, presenting improved dish-washer resistance and good adherence on the substrate. The invention further relates to a method for application of such enamel coating to a substrate.

The composition of the porcelain enamel in question comprises about 30% to about 50% SiO₂, about 30 to about 40% R₂O, about 10 to about 25% TiO₂, about 0 to about 5% RO, about 0 to about 4% V₂O₅, about 0 to about 7% MₓO_{y}, about 0 to about 4% B₂O₃, about 0 to about 3% Al₂O₃, about 0 to about 4% P₂O₅, about 0 to about 1% MoO₃, about 0 to about 2% F₂, about 0 to about 4% ZrO₂, about 0 to about 4% ZnO, about 0 to about 6% NOₓ, wherein R₂O represents at least one alkali oxide, wherein RO represent at least one earth alkali oxide and wherein MₓO_{y} represent at least one oxide selected from the group consisting of Fe₂O₃, CuO, MnO, CoO, NiO, Sb₂O₃, SnO₂.

## Description

The present invention relates to a low-V₂O₅- content and even V₂O₅-free porcelain enamel with improved dish-washer resistance and good adherence on various substrates. The invention moreover relates to a low-V₂O₅- content and even V₂O₅-free porcelain enamel coating for application on a substrate made of aluminium, cast aluminum, aluminium alloy, aluminium-magnesium alloy, cast aluminium alloy, copper, austenitic stainless steel and mild steel, presenting improved dish-washer resistance and good adherence on the substrate. The invention further relates to a method for application of such enamel coating to a substrate.

WO 2006/083160 A1 relates to an enamel composition for application as dielectric. The invention also relates to the use of such an enamel composition for application as dielectric. The invention further relates to a dielectric layer with such an enamel composition. In addition, the invention relates to an assembly of such a dielectric layer and a support structure manufactured at least partially from stainless steel, wherein the dielectric player is arranged on a part of the support structure manufactured from stainless steel. The invention moreover relates to a method for manufacturing such an assembly. The enamel composition as presented in WO 2006/083160 can be not used on aluminium, cast aluminium, aluminium alloys, aluminium-magnesium alloys and copper because firing temperature of the enamel composition is much more higher than melting point of the substrate (600-660 °C). Furthermore, the enamel composition as presented in WO 2006/083160 can be not used on aluminium, cast aluminium, aluminium alloys, aluminium-magnesium alloys, copper and also austenitic steel because of to low TEC of the presented enamel composition and therefore is a cause of bad adherence.

Thus, the problem of the invention with respect to this prior art is to be seen in the provision of an enamel composition being able to be fired on low temperature sensitive metals, for example at a temperature in the range of 520 to 580 °C. Furthermore, said enamel composition should have a good dish-washer resistance.

Said problem is solved in a first embodiment by porcelain enamel compositions for enamelling a substrate selected from the group of aluminium, cast aluminium, aluminium alloy, aluminium-magnesium alloy, copper, austenitic stainless steel and mild steel, said composition including a glass frit, said glass frit comprising by weight: about 30% to about 50% SiO₂,
about 30 to about 40% R₂O,
about 10 to about 25% TiO₂,
about 0 to about 5% RO,
about 0 to about 5% V₂O₅,
about 0 to about 7% MₓO_{y},
about 0 to about 4% B₂O₃,
about 0 to about 3% Al₂O₃,
about 0 to about 4% P₂O₅,
about 0 to about 1% MoO₃,
about 0 to about 2% F₂,
about 0 to about 4% ZrO₂,
about 0 to about 4% ZnO and
about 0 to about 6% N₂O₅
   wherein
R₂O is an alkaline oxide selected from the group of Na₂O, K₂O and LI₂O and combinations thereof,
RO is an earth alkaline oxide selected from the group of MgO, CaO, SrO, BaO and combinations thereof and
MₓO_{y} is an oxide selected from the group consisting of Fe₂O₃, CuO, MnO, CoO, NiO, Sb₂O₃, SnO₂, and combinations thereof.

In general, the present invention requires the following pre-treatment of a substrate made for example of aluminium, sheet aluminium alloy, sheet aluminium-magnesium alloy:
- Free silicates and inhibitors alkaline degreasing (temperature 60-70 °C/5-10 min)
- Warm rinsing with overflow (temperature 60 °C)
- Alkaline pickling (temperature 60 °C, losses in weight 6-10 g/m²)
- Warm rinsing with overflow (temperature 60 °C)
- Cold rinsing with overflow
- Neutralisation 1.5l HNO₃/10l (temperature 20 °C)
- Cold rinsing with overflow
- Cold rinsing with deionised water
- Drying at 80°C.

In the case of cast aluminium alloy the following treatment is preferred according to the present invention:
- Thermal degreasing 520°C/10min
- Sand-blasting.

In case of austenitic stainless steel the following treatment is preferred according to the present invention:
- Chemical degreasing
- Sand-blasting

The beneficial properties of the porcelain enamel according to the present invention are determined by several test methods as referred hereinafter:

### Adherence "spalling" test:

This test is determined by antimony trichloride test to ISO 51173. To this end, the enamelled sample is dipped in an appropriately saturated solution for 24h, after scratching a cross shape in the enamel coating. If no significant changes in the scratch are detected after this period, the test is considered successful.

### Dishwasher test:

Similarly enamelled specimens (1 of them being the standard) are simultaneously exposed to attack by a commercially available dishwasher detergent "Calgonit^{®} compact" powder 30g/l under 60°C during 6h, the solution being continuously stirred during the test. The loss in mass is determined and used to calculate the rate of loss in mass per unit area. The loss in mass per unit area of tested specimens was compare with the loss in mass per unit area of the standard sample. The standard sample was the V₂O₅-enamel with the best dish-washer resistance.

In case that the compositions according to the present invention should result in a specific colour or specific performance, the use of well-known inorganic pigments (as mill addition) and/or an effect pigments (added after milling process) may be taken into account. Effect pigments contain thin platelets of natural mineral mica or are based on a synthetic substrate, namely, aluminium oxide flakes or silicon dioxide flakes or calcium-aluminum-borosilicate particles, which are covered with a thin layer of metal oxides such as titanium dioxide, iron oxide and/or tin oxide. These effect pigments are commercially available.

As is well-known in the prior art, the manufacture of porcelain enamels usually requires the use of mill additions. Accordingly, the use of mill additions selected from the group of boric acid, formic acid, molyibdic acid, sodium molybdate, ammonium molybdate, potassium silicate, sodium silicate, lithium silicate, hydroxides, fluorides, carbonates, nitrate, nitrite, aerosols, urea, and combination thereof is preferred.

In principle the porcelain enamel composition according to the present invention may be applied on a substrate by various processes. In particular, the so-called "one coat/one fire" process is in particular preferred to apply the compositions on a substrate. Said process is in particular characterized by the following steps of
a) applying said enamel composition on said substrate by wet spraying
b) firing the enamel at a temperature in the range of 535 to 580 °C.

Alternatively the porcelain enamel coating compositions according to the present invention may be applied by the so-called "two coat/one fire" application procedure. This process is in particular characterized by the following steps of
a) applying the 1^{st} enamel composition as defined in claims 1 to 3 on a substrate by wet spraying, having adherence properties
b) applying the 2^{nd} enamel composition as defined in claims 1 to 3 on said precoated substrate by wet spraying, having dish-washer resistance
c) firing said enamel compositions at the temperature in the range of 535 to 580 °C.

As is well-known in the art, the production of an enamel frit composition requires the milling whereby a general wet-milling or dry-milling is quite known.

Thus, in a further embodiment of the present invention, said enamel composition is wet-milled with said mill addition(s) or said pigment(s).

Alternatively to the above described process, said enamel composition(s) is (are) dry-milled and dissolved in water with said mill addition(s) and/or said pigment(s).

According to the present invention, the compositions and processes are used for enamelling of the substrate selected from the group consisting of aluminium (TEC: 240 x 10⁻⁷ / K), aluminium alloy (TEC: 240- 260 x 10⁻⁷ / K), aluminium-magnesium alloy (TEC: 240- 260 x 10⁻⁷ / K), cast aluminium alloy (TEC: 240- 260 x 10⁻⁷ / K), copper (TEC: 180x10⁻⁷ / K) and austenitic stainless steel (TEC: 240 x 10⁻⁷ / K) presenting improved dish-washer resistance and good adherence on the substrate.

### Examples:

The invention is illustrated on the basis of the following non-limiting examples. Amounts of the oxides given in the examples relate to parts by weight unless otherwise indicated.

### Example 1:

A first glass frit A was smelted according to conventional means (1150 °C/20min) whereby a glass frit resulted after melting with the composition and TEC shown in table 1.

**Table 1:**

| | | | | | | | | | | | |
|---|---|---|---|---|---|---|---|---|---|---|---|
| Al₂O₃ | B₂O₃ | CaO | Fe₂O₃ | K₂O | Li₂O | MoO₃ | Na₂O | P₂O₅ | SiO₂ | TiO₂ | TEC 400 |
| 0,5 | 2 | 2,5 | 4,3 | 11,8 | 2,3 | 0,3 | 19,1 | 2 | 39,1 | 16,1 | 162*10⁻⁷ |

The frit together with milled additives was wet milled to a fineness of 0.1/16900# (BAYER-Enamel-Test sieve) in oder to obtain an enamel slurry. The composition of the slurry shown in table 2.

**Table 2:**

| Component | Parts by weight |
|---|---|
| Frit | 100 |
| Boric acid | 4 |
| Potassium hydroxide | 1,5 |
| Sodium silicate | 1 |
| Black pigment | 10 |
| Deionised water | 55-60 |

After grinding and sieving the enamel was sprayed onto the substrates and fired at the temperature of 560°C. The layer thickness amounted about 65-80µm.

The enamel was tested according to: Spalling test
The results may be found in table 3.

**Table 3:**

| Substrate | Aluminium alloys, aluminium-magnesium alloys | | | | | Stainless steel | | Cast Alu |
|---|---|---|---|---|---|---|---|---|
| | 4917 | 4006 | 3003 | 3105 | 3004 | 304 | 316L | |
| Spalling test | Ok | Ok | Ok | Ok | Ok | Ok | Ok | Ok |

Dish-washer resistance, "Pemco" home test - Calgonit^{®} compact 6h/ 60°C - 30g Calgonit^{®}/l: weight loss - 2.2 g/m²

### Example 2:

Said glass frit A was smelted according to Example 1 under the same conditions.

The frit together with usual milling additives was wet milled to a fineness of 0.1/16900# in order to obtain an enamel slurry. The composition of the slurry shown in table 4.

**Table 4:**

| Component | Parts by weight |
|---|---|
| Frit | 100 |
| Boric acid | 4 |
| Potassium hydroxide | 1,5 |
| Sodium silicate | 1 |
| Deionised water | 55 |

After grinding and sieving the enamel was sprayed onto the substrates and fired at the temperature of 560°C. The layer thickness amounted about 65-80µm.

The enamel was tested according to:
Spalling test

The results may be founding table 5.

**Table 5:**

| Alloy N | Aluminium alloys | | |
|---|---|---|---|
| | 4917 | 4006 | 3003 |
| Spalling test | Ok | Ok | Ok |

Dish-washer resistance, "Pemco" home test - Calgonit^{®} compact 6h/ 60°C - 30g Calgonit^{®}/l: weight loss - 2.4g/m²

### Example 3:

Said glass frit A was smelted according to Example 1 under the same conditions.

The frit was dry milled in a ball mill to a finesse D (50) ∼ 6µm. After sieving (sieve 80µm) 100g powder was dissolved, using high speed mixer in 4% boric acid solution with the milling additions to enamel slurry.

**Table 6:**

| Component | Parts by weight |
|---|---|
| 4% Boric acid solution | 55-60 |
| Potassium hydroxide | 0.5 |
| Sodium silicate | 1 |
| Black pigment | 10 |

The enamel was sprayed onto the substrates and fired at the temperature of 560°C. The layer thickness amounted about 65-80µm.

Enamel was tested according to:
Spalling test

The results may be found in Table 7.

**Table 7:**

| Substrate | Aluminium alloys | | | Stainless steel | | Cast Alu |
|---|---|---|---|---|---|---|
| | 4917 | 4006 | 3003 | 304 | 316L | |
| Spalling test | Ok | Ok | Ok | Ok | Ok | Ok |

Dish-washer resistance, "Pemco" home test - Calgonit^{®} compact 6h/ 60°C - 30g Calgonit^{®}/l: weight loss - 0.3 g/m²

### Example 4:

A second glass frit B was smelted according to conventional means (1150°C / 30 min) whereby a glass frit resulted after melting with the composition and TEC shown in table. 8.

**Table 8:**

| | | | | | | | | | | | |
|---|---|---|---|---|---|---|---|---|---|---|---|
| Al₂O₃ | B₂O₃ | BaO | Fe₂O₃ | K₂O | Li₂O | Na₂O | P₂O₅ | SiO₂ | TiO₂ | V₂O₃ | TEC 400 |
| 0,1 | 0,6 | 0,3 | 3 | 11,8 | 2,3 | 19,2 | 1,6 | 35,2 | 23,7 | 2,2 | 166*10⁻⁷ |

The frit together with milling additives was wet milled to a fineness of 0.1/16900 in order to obain an enamel slurry. The composition of the slurry shown in table 9.

**Table 9:**

| Component | Parts by weight |
|---|---|
| Frit | 100 |
| Boric acid | 4 |
| Potassium hydroxide | 1.5 |
| Sodium silicate | 1 |
| Deionised water | 50 |

After grinding and sieving the enamel was sprayed onto the substrates and fired at the temperature of 560°C. The layer thickness amounted about 65-80µm.

Enamel was tested according to:
Spalling test - very good

The results may be found in Table 10.

**Table 10:**

| Substrate | Aluminium alloys | | | Stainless steel | |
|---|---|---|---|---|---|
| | 4917 | 4006 | 3003 | 304 | 316L |
| Spalling test | Ok | Ok | Ok | Ok | Ok |

Dish-washer resistance, "Pemco" home test - Calgonit^{®} compact 6h/ 60°C - 30g Calgonit^{®}/l: weight loss - 0.8 g/m²

### Example 5:

A third glass frit C and said first glass frit A (s. Tab. 1) were smelted according to conventional means (1150°C / 20min) whereby glass frit C resulted after melting with the compositions and TEC shown in table. 11.

**Table 11:**

| Al₂O₃ | B₂O₃ | CaO | CuO | K₂O | Li₂O | MoO₃ | Na₂O | P₂O₅ | SiO₂ | TiO₂ | TEC 400 |
|---|---|---|---|---|---|---|---|---|---|---|---|
| 0,5 | 2 | 2,4 | 4,9 | 11,8 | 2,3 | 0,3 | 19 | 2 | 38,8 | 16 | 162*10⁻⁷ |

The frits A and C together with milling additives were wet milled separately to a fineness of 0.1/16900 in order to obtain the enamel slurries "a" and "c". The composition of the slurries shown in table 12.

**Table 12:**

| Component | "c", parts by weight | "a", parts by weight |
|---|---|---|
| Frit | 100 | 100 |
| Boric acid | 4 | 4 |
| Potassium hydroxide | 1.5 | 1.0 |
| Sodium silicate | 1 | 1 |
| Black pigment | | 10 |
| Deionised water | 50 | 55-60 |

In order to obtain a good adherence the enamel slurry "c" was wet sprayed onto the substrates as the first layer. The layer thickness amounted to about 20-25µm. In order to obtain a dish-washer resistance the enamel slurry "a" was wet sprayed onto the first layer as the second layer. The layer thickness amounted about 50-60µm. After drying 2 coats, the composition was fired at the temperature of 560°C.

Enamel composition was tested according to:
Spalling test

The results may be found in Table 13.

**Table 13:**

| Alloy N | Aluminium-magnesium alloys | |
|---|---|---|
| | 3105 | 3004 |
| Spalling test | Ok | Ok |

Dish-washer resistance, "Pemco" home test - Calgonit^{®} compact 6h/ 60°C - 30g Calgonit^{®}/l: weight loss - 1.1 g/m²

### Example 6:

A fourth glass frit D was smelted according to conventional means (1150°C / 20min) whereby a glass frit resulted after melting with the composition and TEC shown in table 14.

**Table 14:**

| Al₂O₃ | B₂O₃ | CaO | Fe₂O₃ | K₂O | Li₂O | MoO₃ | Na₂O | P₂O₅ | SiO₂ | TiO₂ | TEC 400 |
|---|---|---|---|---|---|---|---|---|---|---|---|
| 0,5 | 2 | 2,5 | 4,3 | 11,8 | 2,3 | 0,3 | 19,1 | 2 | 37 | 18,2 | 159*10⁻⁷ |

The frit was wet milled to a fineness of 0.1/16900# to enamel slurry.

The composition of the slurry shown in table 15.

**Table 15:**

| Component | Parts by weight |
|---|---|
| Frit | 100 |
| Boric acid | 4 |
| Potassium hydroxide | 1,5 |
| Sodium silicate | 1 |
| Deionised water | 50 |

After grinding and sieving the enamel was sprayed onto the substrates and fired at the temperature of 560°C. The layer thickness amounted about 65-80µm.

Enamel was tested according to:
Spalling test

The results may be found in table 16.

**Table 16:**

| Substrate | Aluminium alloys, aluminium-magnesium alloys | | | | | Stainless steel | | Cast Alu |
|---|---|---|---|---|---|---|---|---|
| | 4917 | 4006 | 3003 | 3105 | 3004 | 304 | 316L | |
| Spalling test | Ok | Ok | Ok | Ok | Ok | Ok | Ok | Ok |

Dish-washer resistance, "Pemco" home test - Calgonit^{®} compact 6h/ 60°C - 30g Calgonit^{®}/l: weight loss - 1.8 g/m²

### Example 7:

Said fourth glass frit D was smelted according to conventional means (1150°C / 20min) whereby a glass frit resulted after melting with the composition and TEC shown in table 14.

The frit was milled to a finesse D (50) 3-4µm. 100g of the powder was mixed with 40 g of the screen-printing medium to the past. The past was applied onto the enamelled surface (as example 6) using screen-printing technology. After drying the enamel layer was fired at the temperature of 560°C. The layer thickness amounted about 5-6 µm.

Enamel was tested according to:
Spalling test

The results may be found in table 17.

**Table 17:**

| | Aluminium alloy |
|---|---|
| Substrate | 4006 |
| Spalling test | Ok |

Dish-washer resistance, "Pemco" home test - Calgonit^{®} compact 6h/ 60°C - 30g Calgonit^{®}/l: weight loss - 0.3 g/m²

### Example 8:

A fifth glass frit E was smelted according to conventional means (1150°C / 20min) whereby a glass frit resulted after melting with the composition and TEC shown in table 18.

**Table 18:**

| Al₂O₃ | B₂O₃ | CaO | Fe₂O₃ | K₂O | Li₂O | MoO₃ | Na₂O | P₂O₅ | SiO₂ | TiO₂ | TEC 400 |
|---|---|---|---|---|---|---|---|---|---|---|---|
| 0,5 | 1,9 | 2,3 | 4,0 | 23.3 | 1.5 | 0,3 | 12,4 | 1,9 | 36.9 | 15,2 | 171*10⁻⁷ |

The frit together with milling additives was wet milled to a fineness of 0.1/16900# in order to obtain enamel slurry. The composition of the slurry shown in table 19.

**Table 19:**

| Component | Parts by weight |
|---|---|
| Frit | 100 |
| Boric acid | 4 |
| Potassium hydroxide | 0.5 |
| Sodium silicate | 1 |
| Black pigment | 10 |
| Deionised water | 55-60 |

After grinding and sieving the enamel was sprayed onto the substrates and fired at the temperature of 560°C. The layer thickness amounted about 65-80µm.

Enamel was tested according to:
Spalling test

The results may be found in table 20.

**Table 20:**

| Substrate | Aluminium alloys, aluminium-magnesium alloys | | | | | Stainless steel | | Cast Alu |
|---|---|---|---|---|---|---|---|---|
| | 4917 | 4006 | 3003 | 3105 | 3004 | 304 | 316L | |
| Spalling test | Ok | Ok | Ok | Ok | Ok | Ok | Ok | Ok |

Dish-washer resistance, "Pemco" home test - Calgonit^{®} compact 6h/ 60°C - 30g Calgonit^{®}/l: weight loss - 5.9 g/m²

## Claims

1. Porcelain enamel compositions for enamelling a substrate selected from the group of aluminium, cast aluminium, aluminium alloy, aluminium-magnesium alloy, copper, austenitic stainless steel and mild steel, said composition including a glass frit, said glass frit comprising by weight: about 30% to about 50% SiO₂,
about 30 to about 40% R₂O,
about 10 to about 25% TiO₂,
about 0 to about 5% RO,
about 0 to about 5% V₂O₅,
about 0 to about 7% MₓO_{y},
about 0 to about 4% B₂O₃,
about 0 to about 3% Al₂O₃,
about 0 to about 4% P₂O₅,
about 0 to about 1% MoO₃,
about 0 to about 2% F₂,
about 0 to about 4% ZrO₂,
about 0 to about 4% ZnO and
about 0 to about 6% N₂O₅
wherein
R₂O is an alkaline oxide selected from the group of Na₂O, K₂O and LI₂O and combinations thereof,
RO is an earth alkaline oxide selected from the group of MgO, CaO, SrO, BaO and combinations thereof and
MₓO_{y} is an oxide selected from the group consisting of Fe₂O₃, CuO, MnO, CoO, NiO, Sb₂O₃, SnO₂, and combinations thereof.

2. The compositions according to claim 1 further comprising inorganic pigments and/or effect pigments.

3. The compositions of claim 1 or 2 further comprising usual mill additions in particular selected from the group of boric acid, formic acid, molyibdic acid, sodium molybdate, ammonium molybdate, potassium silicate, sodium silicate, lithium silicate, hydroxides, fluorides, carbonates, nitrate, nitrite, aerosols, urea, inorganic pigments, effect pigments and combination thereof.

4. One coat/ one fire application of a porcelain enamel coating composition as defined in claims 1 to 4 on a substrate, comprising the following steps of:
a) Applying said enamel composition on said substrate by wet spraying
b) Firing the enamel at a temperature in the range of 535 to 580 °C.

5. Two coat/ one fire application of a porcelain enamel coating composition as defined in claims 1 to 4, comprising the following steps of:
a) Applying the 1^{st} enamel composition as defined in claims 1 to 3 on a substrate by wet spraying,
b) Applying the 2^{nd} enamel composition as defined in claims 1 to 3 on said precoated substrate by wet spraying,
c) Firing said enamel compositions at the temperature in the range of 535 to 580 °C.

6. The method according to claims 4 or 5 wherein said enamel composition(s) is (are) wet milled with said mill addition(s) and/or said pigment(s).

7. The method according to claims 4 or 5 wherein said enamel composition(s) is (are) dry milled and dissolved in water with said mill addition(s) and/or said pigment(s).
